(19) Europäisches Patentamt
European Patent Office
Office européen des brevets

(11) Veröffentlichungsnummer: **0 439 844 A2**

# (12) EUROPÄISCHE PATENTANMELDUNG

(21) Anmeldenummer: **90125843.4**

(22) Anmeldetag: **31.12.90**

(51) Int. Cl.⁵: **C08G 77/62**, C08G 77/60, C04B 35/58

(30) Priorität: **27.01.90 DE 4002383**

(43) Veröffentlichungstag der Anmeldung: **07.08.91 Patentblatt 91/32**

(84) Benannte Vertragsstaaten: **BE DE ES FR GB IT NL**

(71) Anmelder: **HOECHST AKTIENGESELLSCHAFT**
**Postfach 80 03 20**
**W-6230 Frankfurt am Main 80(DE)**

(72) Erfinder: **Vaahs, Tilo, Dr.**
**Am Flachsland 54**
**W-6233 Kelkheim (Taunus)(DE)**
Erfinder: **Kleiner, Hans-Jerg, Dr.**
**Altkönigstrasse 11a**
**W-6242 Kronberg(DE)**
Erfinder: **Brück, Martin**
**Haneckstrasse 17**
**W-6238 Hofheim am Taunus(DE)**

## (54) SiC1-Gruppen enthaltende Silazanpolymere, Verfahren zu ihrer Herstellung, aus ihnen herstellbare, Siliciumnitrid enthaltende keramische Materialien, sowie deren Herstellung.

(57) Die Erfindung betrifft neue, SiCl-Gruppen enthaltende Silazanpolymere, ihre Herstellung, ihre Weiterverarbeitung zu Siliziumnitrid enthaltendem keramischen Material, sowie dieses Material selbst. Zur Herstellung der SiCl-Gruppen enthaltenden Silazanpolymeren werden $\alpha,\omega$-Chlorsilazane der Formel I

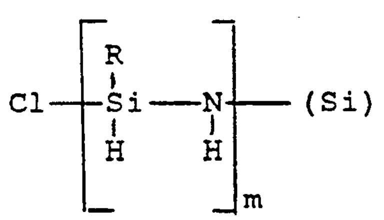

(I)

worin m Werte zwischen 1 und 12 annimmt und -(Si) ein Silylrest der Formel $-SiHR^1Cl$, $-SiR^2R^3Cl$, $-SiR^4Cl_2$, $-SiR^5Cl-CH_2CH_2-SiR^5Cl_2$, oder $-SiCl_2-CH_2CH_2-SiR^6Cl_2$ und R = $C_1$-$C_6$-Alkyl oder $C_2$-$C_6$-Alkenyl und unabhängig voneinander $R^1$-$R^6$ = H, $C_1$-$C_6$-Alkyl oder $C_2$-$C_6$-Alkenyl ist, auf Temperaturen von 100° C bis 400° C erhitzt.

Die erfindungsgemäßen SiCl-Gruppen enthaltenden Silazanpolymeren können durch Umsetzung mit Ammoniak in Polysilazane umgewandelt werden, die ihrerseits zu Siliziumnitrid enthaltenden keramischen Materialien pyrolysiert werden können.

EP 0 439 844 A2

# SICL-GRUPPEN ENTHALTENDE SILAZANPOLYMERE, VERFAHREN ZU IHRER HERSTELLUNG, AUS IHNEN HERSTELLBARE, SILICIUMNITRID ENTHALTENDE KERAMISCHE MATERIALIEN, SOWIE DEREN HERSTELLUNG

Die Erfindung betrifft neue, SiCl-Gruppen enthaltende Silazanpolymere, ihre Herstellung, ihre Weiterverarbeitung zu Siliziumnitrid enthaltendem keramischen Material, sowie dieses Material selbst.

Die Pyrolyse von Polysilazanen zu Siliziumnitrid enthaltendem keramischen Material wurde bereits in der Literatur (R.R. Wills et al., Ceramic Bulletin, Vol. 62 (1983), 904-915) beschrieben.

Zur Herstellung von Polysilazanen werden in der Regel Chlorsilane als Ausgangsmaterialien eingesetzt und diese mit Ammoniak, primären oder sekundären Aminen umgesetzt (US-PS 4 540 703, US-PS 4 543 344, US-PS 4 595 775, US-PS 4 397 828, US-PS 4 482 669).

Die vorliegende Erfindung stellt neue Ausgangsmaterialien für Polysilazane zur Verfügung, nämlich chlorhaltige Silazanpolymere.

Ein Gegenstand der vorliegenden Erfindung ist ein Verfahren zur Herstellung von SiCl-Gruppen enthaltenden Silazanpolymeren, dadurch gekennzeichnet, daß man $\alpha,\omega$-Chlorsilazane der Formel I

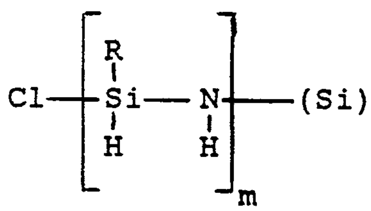

(I)

worin m Werte zwischen 1 und 12 annimmt und -(Si) ein Silylrest der Formel $-SiHR^1Cl$, $-SiR^2R^3Cl$, $-SiR^4Cl_2$, $-SiR^5Cl-CH_2CH_2-SiR^5Cl_2$ oder $-SiCl_2-CH_2CH_2-SiR^6Cl_2$ und R = $C_1$-$C_6$-Alkyl oder $C_2$-$C_6$-Alkenyl und unabhängig voneinander $R^1$-$R^6$ = H, $C_1$-$C_6$-Alkyl oder $C_2$-$C_6$-Alkenyl ist, auf Temperaturen von 100° C bis 400° C erhitzt. Vorzugsweise ist R = $CH_3$ und unabhängig voneinander $R^1$-$R^6$ = H, $C_1$-$C_3$-Alkyl oder $C_2$-$C_3$-Alkenyl. Besonders bevorzugt ist R = $CH_3$ und unabhängig voneinander $R^1$ $R^6$ = H, $CH_3$ oder Vinyl.

Vorzugsweise erhitzt man auf Temperaturen von 150° C bis 250° c.

Bei der Umsetzung treten als flüchtige Produkte die Chlorsilane $CH_3SiHCl_2$, $CH_3SiH_2Cl$ und wenig Wasserstoff auf. Die Chlorsilane können in einer Kühlfalle aufgefangen werden. Neben diesen flüchtigen Produkten treten auch feste Anteile auf. Nach Beendigung der Reaktion löst man soweit möglich in polaren oder unpolaren Lösungsmitteln, die sich inert gegenüber dem Reaktionsgemisch verhalten, z.B. Pentan, Hexan, Toluol, Diethylether, THF etc.

Man filtriert unlösliche Bestandteile ab und befreit das klare Filtrat vom Lösungsmittel. Zurück bleibt das SiCl-Gruppen enthaltende Silazanpolymere. Dieses hat im allgemeinen folgende Elementzusammensetzung:

| | | |
|---|---|---|
| Silicium | 35-55 | Gew.% |
| Kohlenstoff | 15-35 | Gew.% |
| Stickstoff | 10-25 | Gew.% |
| Wasserstoff | 5-10 | Gew.% |
| Chlor | 5-30 | Gew.% |
| Sauerstoff | 0- 5 | Gew.% |

Ein weiterer Gegenstand der vorliegenden Erfindung sind demgemäß SiCl-Gruppen enthaltende Silazanpolymere, dadurch erhältlich, daß man $\alpha,\omega$-Silazane der Formel I

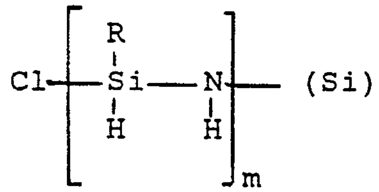

(I)

worin m Werte zwischen 1 und 12 annimmt und -(Si) ein Silylrest der Formel $-SiHR^1Cl$, $-SiR^2R^3Cl$, $-SiR^4Cl_2$, $-SiR^5Cl-CH_2CH_2-SiR^5Cl_2$ oder $-SiCl_2-CH_2CH_2-SiR^6Cl_2$ und R = $C_1$-$C_6$-Alkyl oder $C_2$-$C_6$-Alkenyl und unabhängig voneinander $R^1$-$R^6$ = H, $C_1$-$C_6$-Alkyl oder $C_2$-$C_6$-Alkenyl ist, auf Temperaturen von 100° C bis 400° C erhitzt.

Die Reaktionsdauer bei der Herstellung der erfindungsgemäßen, SiCl-Gruppen enthaltenden Silazanpolymeren - im folgenden alternativ auch als polymere Chlorsilazane bezeichnet - richtet sich nach der Geschwindigkeit des Aufheizens und der Reaktionstemperatur. Im allgemeinen genügt eine Reaktionszeit von 3 bis 7 Stunden.

Es ist auch möglich, die Reaktion in einem organischen Lösungsmittel durchzuführen. Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoff wie n-Decan, Decalin, Xylol, Toluol, chlorierte Kohlenwasserstoffe wie Chlorbenzol, oder Ether wie Dibenzylether, Diethylenglykoldiethylether. Bei Verwendung eines Lösungsmittels, in dem das gebildete $NH_4Cl$ unlöslich ist, kann letzteres durch Filtration abgetrennt werden. Die erfindungsgemäßen, SiCl-Gruppen enthaltenden Silazanpolymere werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1 bis 10 Atmosphären kann gearbeitet werden.

Das Verfahren kann auch kontinuierlich gestaltet werden.

Die $\alpha,\omega$-Chlorsilazane, aus denen die erfindungsgemäßen polymeren Chlorsilazane hergestellt werden, können dadurch erhalten werden, daß man ein Oligohydridoorganylsilazan der Formel $[-RSiH-NH-]_n$, worin n etwa 3 bis 12 ist, mit mindestens einem der Chlorsilane $R^1HSiCl_2$, $R^2R^3SiCl_2$, $R^4SiCl_3$, $Cl_2R^5SiCH_2CH_2SiR^5Cl_2$ oder $Cl_3SiCH_2CH_2SiR^6Cl_2$ bei -20° C bis +50° C umsetzt, wobei R = $C_1$-$C_6$-Alkyl oder $C_2$-$C_6$-Alkenyl und unabhängig voneinander $R^1$-$R^6$ = H, $C_1$-$C_6$-Alkyl oder $C_2$-$C_6$-Alkenyl ist.

Die als Ausgangsmaterialien der $\alpha,\omega$-Chlorsilazane der Formel (I) eingesetzten Chlorsilane $R^1HSiCl_2$, $R^2R^3SiCl_2$,$R^4SiCl_3$ sind im Handel erhältlich, die ethylenverbrückten Chlorsilane $Cl_2R^5SiCH_2CH_2SiR^5Cl_2$ und $Cl_3SiCH_2CH_2SiR^6Cl_2$ sind durch eine Hydrosilylierung von $R^1HSiCl_2$ und Ethin zugänglich, oder durch Hydrosilylierung von Vinyltrichlorsilan und $R^1HSiCl_2$. Die weiterhin als Ausgangsmaterial für (I) verwendeten Oligohydridoorganylsilazane werden hergestellt, indem man Dichlorhydridoorganylsilan $RSiHCl_2$, wobei R die obige Bedeutung besitzt, mit $NH_3$ in einem Lösungsmittel umsetzt, wie in US-PS 4 482 669 beschrieben (siehe dort insbesondere Spalte 4, 5, 7, 8). Dabei entsteht im allgemeinen ein Gemisch von cyclischen Oligohydridoorganylsilazanen $[-RSiH-NH-]_n$,' mit n etwa 3 bis etwa 12. Zur Umsetzung mit den genannten Chlorsilanen werden vorzugsweise die Oligohydridoorganylsilazane $[-RSiH-NH-]_n$ ohne Lösungsmittel vorgelegt und die Chlorsilane vorsichtig zugegeben. Die Reaktionstemperatur beträgt dabei -20° C bis +50° C, vorzugsweise -10° C bis 0° C. Es ist auch möglich, die Reaktion in einem Lösungsmittel, welches mit den Reaktanten nicht reagiert, durchzuführen.

So kann das Oligosilazan in einem Lösungsmittel oder als Reinsubstanz vorgelegt und das Chlorsilan in reiner Form oder als Lösung zugegeben werden. Für die Reaktion geeignete Lösungsmittel sind z.B. gesättigte aliphatische oder aromatische Kohlenwasserstoffe wie n-Pentan, Cyclohexan, Toluol oder chlorierte Kohlenwasserstoffe wie Chloroform oder Chlorbenzol, oder Ether wie Diethylether oder THF.

Die neuen polymeren Chlorsilazane können durch Umsetzung mit Ammoniak ("Ammonolyse") in Polysilazane überführt werden, die wiederum durch Pyrolyse in Siliziumnitrid enthaltendes keramisches Material umgewandelt werden können.

Die Ammonolyse kann in flüssigem $NH_3$ erfolgen. Es ist jedoch vorteilhaft, sie in einem organischen Lösungsmittel durchzuführen. Geeignet sind alle Lösungsmittel, die sich inert gegenüber den Silazanen verhalten. Bevorzugt sind solche Lösungsmittel, in denen das als Nebenprodukt anfallende Ammoniumchlorid geringe Löslichkeit und gute Abtrennbarkeit aufweist, z.B. Ether, aliphatische und aromatische Kohlenwasserstoffe, chlorierte Kohlenwasserstoffe. Die Reaktanten können bei der Ammonolyse in beliebiger Reihenfolge in das Reaktionsgefäß eingespeist werden. Es ist jedoch zumeist vorteilhaft, das polymere Chlorsilan in Lösung vorzulegen und gasförmigen Ammoniak einzuleiten oder flüssigen Ammoniak hinzuzufügen. Wurden die erfindungsgemäßen polymeren Chlorsilazane in einem geeigneten organischen Lösungsmittel hergestellt, so kann die Ammonolyse ohne vorherige Abtrennung des $NH_4Cl$ in diesem Lösungsmittel durchgeführt werden. Die Ammonolyse wird vorzugsweise mit einem Überschuß $NH_3$ durchgeführt, um sicher zu gehen, daß die Reaktion vollständig ist und die Endprodukte möglichst weitgehend chlorfrei sind. Im allgemeinen reicht für diesen Zweck die doppelte stöchiometrische Menge.

Im allgemeinen wird bei einer Temperatur von etwa -50 bis +100 °c gearbeitet, vorzugsweise bei -20 bis +30 °C, insbesondere bei Raumtemperatur (wobei mit Eis gekühlt wird). Es ist jedoch auch möglich, oberhalb Raumtemperatur, z.B. bei der Siedetemperatur des verwendeten Lösungsmittels, oder unterhalb Raumtemperatur, z.B. bei -33 °C bei der Verwendung von flüssigem $NH_3$ zu arbeiten.

Nach beendeter Ammonolyse wird ggf. das überschüssige $NH_3$ entfernt und das angefallene Ammoniumchlorid abfiltriert. Zur Erhöhung der Ausbeute kann der Niederschlag mit einem der obengenannten organischen Lösungsmittel gewaschen werden. Nach Abdestillation des Lösungsmittels bei vermindertem Druck werden die Polysilazane unmittelbar als weiße Pulver erhalten. Die Polysilazane sind in den obigen organischen Lösungsmitteln löslich, so daß diese sowohl für das Beschichten von Oberflächen als auch für die Herstellung von Fasern verwendet werden können.

Die Polysilazane können durch Pyrolyse in inerter Stickstoff- oder Argonatmosphäre bei Temperaturen von 800 bis 1200 °C zu amorphen, dichten Materialien pyrolysiert werden, die im wesentlichen aus Si, N und C bestehen und in Spuren auch H und O enthalten können. Bei Pyrolysetemperaturen oberhalb 1200 °C, etwa im Bereich von 1200 °C bis 1400 °C, entstehen teilamorphe, mikrokristalline keramische Werkstoffe, die als kristalline Phase $\alpha$-$Si_3N_4$ enthalten.

Ein besonderer Vorteil ist, daß sich die Polysilazane vor der Pyrolyse nach verschiedenen Verfahren zu dreidimensionalen Formkörpern formen lassen.

Eine wichtige Methode der Formgebung ist das Ziehen von Fasern. Dabei lassen sich Fasern aus hochviskosen Lösungen des Polysilazans in Lösungsmitteln, wie Toluol, THF oder Hexan ziehen. Das Faserziehen geschieht vorteilhafterweise mittels Spinndüsen von 80 bis 150 $\mu$m Durchmesser. Durch anschließendes Strecken wird der Faden verjüngt, so daß nach der Pyrolyse ein sehr fester Faden von 2 bis 20 $\mu$m, insbesondere 5 bis 15 $\mu$m Durchmesser entsteht. Die durch anschließende Pyrolyse hergestellten Fasern finden Verwendung als mechanische Verstärkungseinlagerungen in faserverstärktem Aluminium, Aluminiumlegierungen und Keramikbauteilen.

Eine weitere wichtige Verarbeitungsmöglichkeit der Polysilazane ist die Herstellung dichter, gut haftender, amorpher oder mikrokristalliner keramischer Beschichtungen auf Metallen, insbesondere Stählen, oder auf Keramiken wie $Al_2O_3$, $ZrO_2$, MgO, SiC oder $Si_3N_4$. Die Beschichtung erfolgt mit Hilfe einer Lösung des Polysilazans in organischen Lösungsmitteln wie Toluol, THF, Hexan. Die pyrolytische Umwandlung in eine amorphe bzw. mikrokristalline Schicht erfolgt im gleichen Temperaturbereich von 800 bis 1200 °C bzw. 1200 bis 1400 °C unter Inertgas wie oben bei dreidimensionalen Formkörpern beschrieben.

Die keramischen Beschichtungen eignen sich wegen ihrer hervorragenden Haftung, hohen Härte und Oberflächengüte besonders zur Oberflächenveredelung von mechanisch und chemisch beanspruchten Maschinenbauteilen.

Weiter kann man die oben beschriebenen Polysilazane mit gleichhoher keramischer Ausbeute von 70 bis 90 % statt in Inertgas auch in $NH_3$-Atmosphäre pyrolysieren. Dabei resultiert ein praktisch kohlenstofffreier, glasklarer, farbloserWerkstoff. Bei der Pyrolyse in $NH_3$ bei 1000 °C oder höher liegt der C-Gehalt unterhalb 0,5 Gew.-%. Das Pyrolyseprodukt besteht je nach Pyrolysetemperatur aus praktisch reinem amorphen Siliziumnitrid (Pyrolyse unterhalb 1200 °C) oder kristallinem $Si_3N_4$ (Pyrolyse oberhalb 1200 °C, insbesondere oberhalb 1300 °C). Die Pyrolyse in $NH_3$ läßt sich auf alle nach den oben beschriebenen Formgebungsverfahren hergestellten Formkörper, also aus Pulvern geformte Körper, Fasern, Beschichtungen anwenden.

Ein weiterer Gegenstand der Erfindung ist somit ein Verfahren zur Herstellung von Siliziumnitrid enthaltendem keramischen Material, dadurch gekennzeichnet, daß man die oben erwähnten, durch ihre Formel oder ihr Herstellungsverfahren charakterisierten polymeren Chlorsilazane mit Ammoniak bei -50 bis +100 °C umsetzt und das dabei gebildete Polysilazan in inerter Stickstoff- oder Argonatmosphäre oder in Ammoniakatmosphäre bei 800 bis 1400 °c pyrolysiert.

Vorzugsweise führt man jedoch die Umwandlung der polymeren Chlorsilazane in Siliziumnitrid enthaltendes keramisches Material so durch, daß man die intermediär entstehenden Polysilazane nicht isoliert. In diesem Fall setzt man die polymeren Chlorsilazane vorzugsweise mit gasförmigem Ammoniak um und pyrolysiert das dabei entstehende Reaktionsgemisch in Ammoniakatmosphäre.

Ein weiterer Gegenstand der vorliegenden Erfindung ist demgemäß ein Verfahren zur Herstellung von Siliziumnitrid enthaltendem keramischen Material, dadurch gekennzeichnet, daß man die oben erwähnten, durch ihre Formel oder ihr Herstellungsverfahren charakterisierten polymeren Chlorsilazane mit Ammoniak

bei 0 bis +300 °C umsetzt und das Umsetzungsprodukt in $NH_3$-Atmosphäre bei 800 - 1400 °C pyrolysiert.

**Versuchsbericht**

1. Herstellung von Oligohydridomethylsilazan $[-CH_3SiH-NH-]_n$.

In 800 ml absolutem THF wurden 100 ml (0,97 mol) Methyldichlorsilan gelöst und für 3 Stunden Ammoniak eingeleitet (Einleitgeschwindigkeit: 0,5 l/min). Durch Kühlen mit einem Eisbad wurde die Reaktionstemperatur im Bereich von 10 bis 15 °C gehalten. Zur Vervollständigung der Reaktion wurde 1 h bei Raumtemperatur gerührt und anschließend unter Argon das Ammoniumchlorid abgetrennt. Der Niederschlag wurde zweimal mit je 350 ml THF gewaschen und die vereinigten THF-Lösungen unter reduziertem Druck eingeengt. Man erhielt ein klares, leicht bewegliches Öl von $[-CH_3SiH-NH-]_n$ mit n = 3-12 in einer Ausbeute von 44,5 g = 78 % der Theorie.

2. Reaktion von $[-CH_3SiH-NH-]_n$ mit $CH_3SiHCl_2$.

100 g (1,7 mol, bezogen auf n = 1) $[-CH_3SiH-NH-]_n$ (n = 3-12) wurden auf -5 °C abgekühlt. Dann tropfte man unter Rühren langsam 48,9 g (0,425 mol) $CH_3SiHCl_2$ ein und behielt die genannte Temperatur noch 60 Minuten bei.

Anschließend wurden 200 ml THF zugegeben und bis zur Sättigung Dimethylamin eingeleitet, ohne daß die Temperatur des Reaktionsgemisches 0 °C überstieg. Das ausgefallene Dimethylaminhydrochlorid wurde abfiltriert und das Filtrat vom Lösungsmittel und flüchtigen Anteilen befreit.

Das resultierende ölige Produkt wurde gaschromatographisch getrennt und die einzelnen Fraktionen massenspektrometrisch untersucht.

Dabei wurden unter anderem die folgenden Moleküle detektiert:

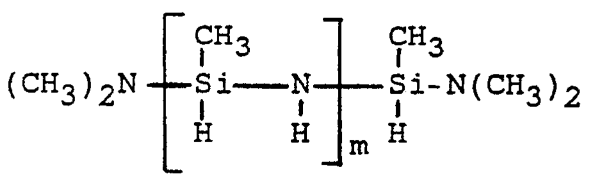

m = 1 - 4

Diese Dimethylaminoderivate entstehen aus den reaktiven α,ω-Dichlorsilazanen:

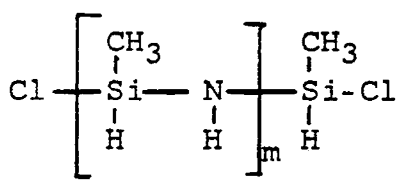

3. Reaktion von $[-CH_3SiH-NH-]_n$ mit Vinylmethyldichlorsilan.

100 g (1,7 mol, bezogen auf n = 1) $[-CH_3SiH-NH-]_n$ (n = 3-12) wurden auf -5 °C abgekühlt. Dann tropfte man unter Rühren langsam 70,5 g (0,5 mol) Vinylmethyldichlorsilan ein und behielt die genannte Temperatur noch 60 Minuten bei.

Anschließend wurden 200 ml THF zugegeben und bis zur Sättigung Dimethylamin eingeleitet, ohne daß die Temperatur des Reaktionsgemisches 0 °C überstieg.

Das ausgefallene Dimethylaminhydrochlorid wurde abfiltriert und das Filtrat vom Lösungsmittel befreit.

Das resultierende ölige Produkt wurde gaschromatographisch getrennt und die einzelnen Fraktionen massenspektrometrisch untersucht.

Dabei wurden unter anderem die folgenden Moleküle detektiert:

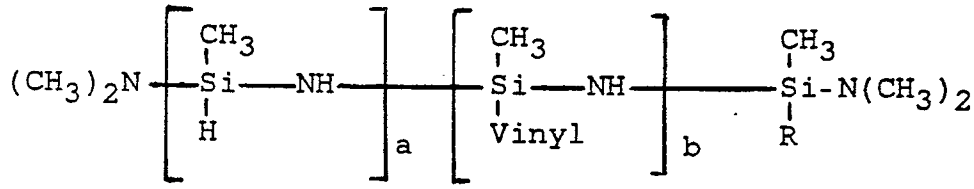

mit folgenden Variablenwerten:

| | | | |
|---|---|---|---|
| 1. | a = 1 | b = 0 | R = Vinyl |
| 2. | a = 2 | b = 0 | R = Vinyl |
| 3. | a = 3 | b = 0 | R = Vinyl |
| 4. | a = 1 | b = 1 | R = Vinyl |
| 5. | a = 2 | b = 1 | R = Vinyl |
| 6. | a = 3 | b = 1 | R = H |

Diese Dimethylaminoderivate entstanden aus den entsprechenden $\alpha,\omega$-Dichlorsilazanen.

**Beispiel 1**

Reaktion von $[-CH_3SiH-NH-]_n$ mit $CH_3SiHCl_2$ und anschließende Herstellung eines SiCl-Gruppen enthaltenden Silazanpolymeren.

100 g (1,0 mol, bezogen auf n = 1) $[-CH_3SiH-NH-]_n$ (n = 3-12) wurden auf -5°C abgekühlt. Dann tropfte man unter Rühren langsam 48,9 g (0,425 mol) $CH_3SiHCl_2$ ein und behielt die genannte Temperatur noch 60 Minuten bei.

Anschließend wurde innerhalb 4 h auf 220°C Ölbadtemperatur erhitzt. Die Innentemperatur lag bei 190°C. Nach 2 h bei dieser Temperatur ließ man abkühlen.

Bei 20°C blieben 110 g einer harten, spröden Substanz zurück, die in THF gelöst und von Unlöslichem abfiltriert wurde. Das Filtrat wurde vom Lösungsmittel befreit und zurück blieb ein klares, bei 20°C glasartig sprödes Material, welches einen bei ca. 120°C liegenden reproduzierbaren Erweichungspunkt besaß (95 g).

Analysendaten (in Gew.-%):

Si 44,7 % ; C 19,2 % , N 17,9 % ; H 6,9 % ; Cl 11,3 %

Keramische Ausbeute bei Pyrolyse in $N_2$ bis 1100°C: 68,5 %

Keramische Ausbeute bei Pyrolyse in $NH_3$ bis 1100°C: 58,9 %

**Beispiel 2**

Reaktion von $[-CH_3SiH-NH-]_n$ mit Vinylmethyldichlorsilan und anschließende Herstellung eines SiCl-Gruppen enthaltenden Silazanpolymeren.

100 g (1,7 mol, bezogen auf n = 1) $[-CH_3SiH-NH-]_n$ (n = 3-12) wurden auf -5°C abgekühlt. Dann tropfte man unter Rühren langsam 70,5 g (0,5 mol) Vinylmethyldichlorsilan ein und behielt die genannte Temperatur noch 60 Minuten bei.

Anschließend wurde innerhalb 4 h auf 220°C Ölbadtemperatur erhitzt. Die Innentemperatur lag bei 205°C. Nach 2 h ließ man abkühlen.

Bei 20°C blieben 114 g eines Gemisches aus sehr zähem Öl und Feststoffanteilen zurück. Es wurde THF zugegeben und abfiltriert. Das klare Filtrat wurde vom Lösungsmittel befreit und es blieb klares, leicht gelbliches, sehr zähes Öl zurück, das eine Viskosität von ca. 5 Poise aufwies.

Analysendaten (in Gew.-%):

Si 38,2 % ; C 31,1 % ; N 16,2 % ; H 7,2 % ; Cl 7,3 %

Keramische Ausbeute bei Pyrolyse in $N_2$ bis 1100°C: 54,2 %

Keramische Ausbeute bei Pyrolyse in $NH_3$ bis 1100°C: 42,1 %

**Beispiel 3**

Reaktion des SiCl-Gruppen enthaltenden Silazanpolymeren aus Beispiel 1 mit Ammoniak zur Herstellung von $Si_3N_4$ enthaltendem keramischen Material.

20 g des polymeren Chlorsilazans aus Beispiel 1 wurden in 200 ml THF gelöst (unter Schutzgas) und anschließend bei 5-10 °C Innentemperatur mit Ammoniak bis zur Sättigung umgesetzt, wobei sämtliche SiCl-Gruppen des eingesetzten Polysilazanes mit NH-Gruppen substituiert wurden.

Das ausgefallene Ammoniumchlorid wurde abfiltriert und das klare, farblose Filtrat vom Lösungsmittel und überschüssigem $NH_3$ befreit. Zurück blieb ein unschmelzbares, aber lösliches weißes Pulver mit der Zusammensetzung:

| | | | |
|---|---|---|---|
| Si | 47,1 Gew.% | C | 22,5 Gew.% |
| H | 8,1 Gew.% | N | 21,8 Gew.% |

Keramische Ausbeute bei Pyrolyse in $N_2$ bis 1100 °C: 79,1 Gew.%
Keramische Ausbeute bei Pyrolyse in $NH_3$ bis 1100 °C: 74,9 Gew.%

## Patentansprüche

1. Verfahren zur Herstellung von SiCl-Gruppen enthaltenden Silazanpolymeren, dadurch gekennzeichnet, daß man $\alpha,\omega$-Chlorsilazane der Formel I

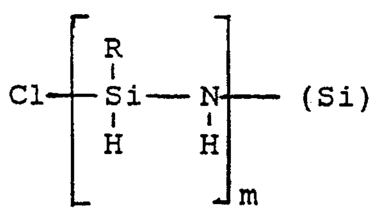

(I)

worin m Werte zwischen 1 und 12 annimmt und -(Si) ein Silylrest der Formel $-SiHR^1Cl$, $-SiR^2R^3Cl$, $-SiR^4Cl_2$, $-SiR^5Cl-CH_2CH_2-SiR^5Cl_2$ oder $-SiCl_2-CH_2CH_2-SiR^6Cl_2$ und R = $C_1$-$C_6$-Alkyl oder $C_2$-$C_6$-Alkenyl und unabhängig voneinander $R^1$-$R^6$ = H, $C_1$-$C_6$-Alkyl oder $C_2$-$C_6$-Alkenyl ist, auf Temperaturen von 100 °C bis 400 °C erhitzt.

2. Verfahren zur Herstellung von SiCl-Gruppen enthaltenden Silazanpolymeren, dadurch gekennzeichnet, daß man $\alpha,\omega$-Chlorsilazane, die durch Reaktion eines Oligohydridoorganylsilazans der Formel $[-RSiH-NH-]_n$,worin n etwa 3 bis etwa 12 ist, mit mindestens einem der Chlorsilane $R^1HSiCl_2$, $R^2R^3SiCl_2$, $R^4SiCl_3$, $Cl_2R^5SiCH_2CH_2SiR^5Cl_2$ oder $Cl_3SiCH_2CH_2SiR^6Cl_2$ bei -20 °C bis +50 °C erhalten worden sind, wobei R = $C_1$-$C_6$-Alkyl oder $C_2$-$C_6$-Alkenyl und unabhängig voneinander $R^1$-$R^6$ = H, $C_1$-$C_6$-Alkyl oder $C_2$-$C_6$-Alkenyl ist, auf Temperaturen von 100 °C bis 400 °C erhitzt.

3. Verfahren nach Anspruch 1 oder 2, dadurch gekennzeichnet, daß R = $CH_3$ und unabhängig voneinander $R^1$-$R^6$ = H, $C_1$-$C_3$-Alkyl oder $C_2$-$C_3$-Alkenyl ist.

4. Verfahren nach Anspruch 1 oder 2, dadurch gekennzeichnet, daß R = $CH_3$ und unabhängig voneinander $R^1$-$R^6$ = H, $CH_3$ oder Vinyl ist.

5. SiCl-Gruppen enthaltende Silazanpolymere, erhältlich nach dem Verfahren gemäß einem der Ansprüche 1 bis 4.

6. Verfahren zur Herstellung von Siliziumnitrid enthaltendem keramischen Material, dadurch gekennzeichnet, daß man SiCl-Gruppen enthaltende Silazanpolymere gemäß Anspruch 5 mit Ammoniak bei -50 bis +100 °C umsetzt und das dabei gebildete Polysilazan in inerter Stickstoff- oder Argonatmosphäre oder in Ammoniakatmosphäre bei 800 bis 1400 °C pyrolysiert.

7. Siliziumnitrid enthaltendes keramisches Material, erhältlich nach dem Verfahren gemäß Anspruch 6.

8. Verfahren zur Herstellung von Siliziumnitrid enthaltendem keramischen Material, dadurch gekennzeichnet, daß man SiCl-Gruppen enthaltende Silazanpolymere gemäß' Anspruch 5 mit Ammoniak bei 0 bis 300 ° C umsetzt und das Umsetzungsprodukt in $NH_3$-Atmosphäre bei 800 - 1400 ° C pyrolysiert.

9. Siliziumnitrid enthaltendes keramisches Material erhältlich nach dem Verfahren gemäß Anspruch 8.